(19) Europäisches Patentamt
European Patent Office
Office européen des brevets

(11) EP 0 614 608 B1

(12) EUROPÄISCHE PATENTSCHRIFT

(45) Veröffentlichungstag und Bekanntmachung des Hinweises auf die Patenterteilung:
**07.01.1999 Patentblatt 1999/01**

(51) Int. Cl.[6]: **A01N 43/76**, A01N 43/40
// (A01N43/76, 43:18, 43:707, 43:40, 47:30), (A01N43/40, 43:18, 43:707, 43:40, 47:30)

(21) Anmeldenummer: **94102316.0**

(22) Anmeldetag: **16.02.1994**

(54) **Synergistische Mischungen zur Bekämpfung von Ackerfuchsschwanz**

Synergistic mixture for control of blackgrass

Mélange synergique pour la contrôle de queue-de-renard

(84) Benannte Vertragsstaaten:
**BE DE DK FR GB NL**

(30) Priorität: **18.02.1993 DE 4304909**

(43) Veröffentlichungstag der Anmeldung:
**14.09.1994 Patentblatt 1994/37**

(73) Patentinhaber:
**Hoechst Schering AgrEvo GmbH**
**13342 Berlin (DE)**

(72) Erfinder:
- **Müller-Wilmes, Urban, Dr.**
  **A-8933 St. Gallen/Obersteiermark (AT)**
- **Wagner, Heinrich-Justus, Dr.**
  **D-50858 Köln (DE)**
- **Brüggemann, Dirk, Dr.**
  **D-21445 Wulfsen (DE)**

(56) Entgegenhaltungen:
**EP-A- 0 144 796** **EP-A- 0 514 769**
**GB-A- 2 018 594** **US-A- 4 904 295**
- **C.R.WORTHING & J.R.HANCE 'The Pesticide Manual, 9th edition' , BRITISH CROP PROTECTION COUNCIL , GB *p197 Cycloxydim***

EP 0 614 608 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

In Populationen von Ackerfuchsschwanz (Alopecurus myosuroides) kann durch gehäufte Anwendung von herbiziden Wirkstoffen, insbesondere getreideselektiven Phenylharnstoffen, eine verminderte Empfindlichkeit gegenüber dieser Wirkstoffgruppe enstehen. Neuerdings mehren sich Beobachtungen aus der landwirtschaftlichen Praxis, die eine Unempfindlichkeit von Ackerfuchsschwanzpopulationen gegenüber anderen herbiziden Wirkstoffen aus der Gruppe der Phenoxy-phenoxy-Verbindungen, wie z.B. Fenoxaprop-ethyl anzeigen.

GB 2018 594 offenbart eine synergistische Wirkung der Kombinationen von Derivaten der 4-Oxyphenoxy-propionsäure mit mindestens einer Verbindung der Gruppe bestehend aus Bentazon, Phenmedipham, Desmedipham oder Metamitron gegen eine Vielzahl von Unkräutern. Eine besondere Wirkung dieser Kombinationen gegen resistente Sorten des Ackerfuchsschwanzes wurde nicht beschrieben.

Überraschenderweise wurde in biologischen Gewächshausversuchen und in Freilandversuchen mit verschiedenen herbizide Wirkstoffen eine neue synergistisch wirksame Kombination gefunden, die bei Anwendung eine außerordentlich gute Wirksamkeit gegen resistente Populationen von Ackerfuchsschwanz zeigt und sehr gut verträglich für die Kulturpflanze ist. Sie ist bezüglich Wirkungsbreite und Wirkungsstärke den bekannten Herbiziden und Herbizidkombinationen überlegen und kann in geringen Aufwandmengen eingesetzt werden.

Gemeinsam ist den Mischungspartner, daß sie eine ausreichende Selektivität zu Getreidepflanzen nicht besitzen, wenn sie als Einzelprodukt zur Kontrolle des Ackerfuchsschwanzes in dieser Kulturpflanzengruppe appliziert werden.

Gegenstand der vorliegenden Erfindung sind herbizide Mittel, gekennzeichnet durch einen synergistisch wirksamen Gehalt an

A1) Fenoxaprop oder Fenoxaprop-P; ((±) bzw. (2R)-2-[4-(6-Chlorbenzoxazol-2-yloxy)phenoxy]propionsäure (Formel I))

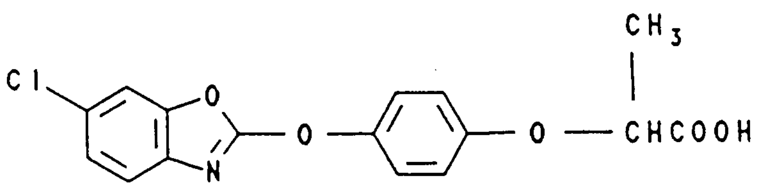

I

oder deren Ester, insbesondere die Ethylester, in Kombination mit

B1) Cycloxydim; ((±)-2-[1-(Ethozyimino)-butyl]-3-hydroxy-5-thian-3-ylcyclohex-2-enon, Formel III),

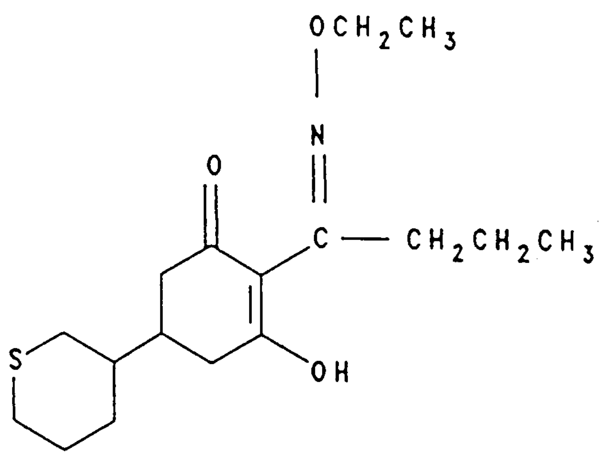

III

In bevorzugter Ausführungsform weisen die erfindungsgemäßen Mittel einen zusätzlichen Gehalt mindestens einer Verbindung aus der Gruppe, welche die Verbindungen

A2) (2-[4-(5-Chlor-5-fluor-2-pyridinyloxy)-phenoxy]-propionsäurepropinylester (Formel II)

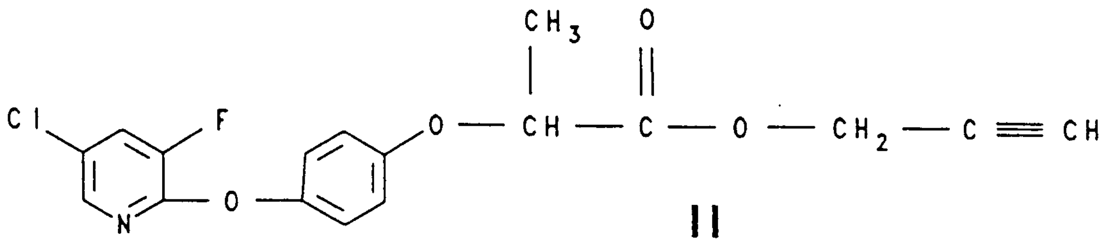

II

B2) Metribuzin; (4-Amino-6-tert.-butyl-3-methylthio--4H-[1,2,4]-triazin-5-on, (Formel IV);

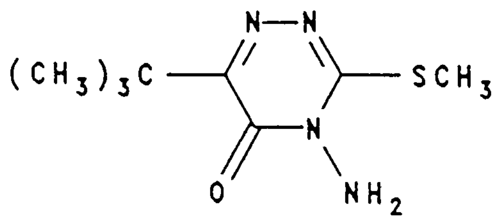

IV

B3) Haloxyfop; (2-[4-[3-Chlor-5-triflouoromethyl]-2-pyridyl]-oxy-phenoxypropionsäure, Formel V),

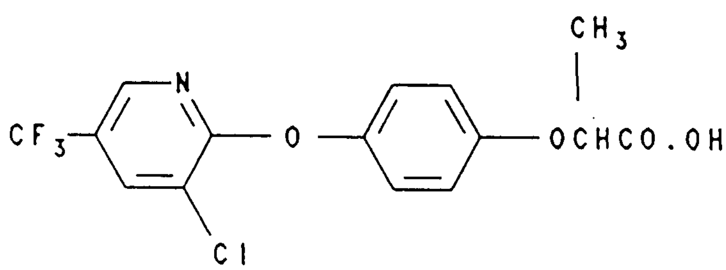

V

oder deren Ester, insbesondere der Methyl- oder der 2-ethoxy-ethylester, und
B4) Isoproturon, (3-(4-Isopropylphenyl)-1,1-dimethylharnstoff, Formel VI)

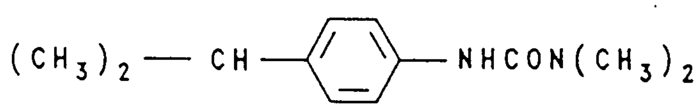

VI

enthält, auf.

Die Verbindungen des Typs B sind alle aus "The Pesticide Manual", 9. Ausgabe Brit. Crop. Prof. Council, 1991 bekannt, mit Ausnahme von A2, die in der EP 0 191 736 beschrieben wird.

Als spezielle Beispiele für die beanspruchten Wirkstoffmischungen seien folgende genannt, ohne daß dadurch eine Einschränkung erfolgen soll: Fenoxaprop-ethyl (A1) + Cycloxidim (B1)

Bei Applikation der Wirkstoffkombinationen auf die grünen Pflanzenteile im Nachauflaufverfahren tritt sehr rasch nach der Behandlung ein Wachstumsstop ein. Die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der neuen

erfindungsgemäßen Mittel beseitigt werden kann.

Obgleich die erfindungsgemäßen Mittel eine ausgezeichnete herbizide Aktivität gegenüber Ackerfuchsschwanz aufweisen, werden die Kulturpflanzen, wie z.B. Weizen, Roggen, Gerste und Triticale nur unwesentlich oder gar nicht geschädigt. Die Mittel eignen sich aus diesen Gründen besonders in Weizen sehr gut zur selektiven Bekämpfung von unerwünschtem Bewuchs von Ackerfuchsschwanz.

Mit den erfindungsgemäßen Wirkstoffkombinationen wird eine herbizide Wirkung erreicht, die über das hinausgeht, was auf Grund der Wirkung der Einzelkomponenten zu erwarten ist. Diese Wirkungssteigerungen erlauben es, die Einsatzmengen der einzelnen Wirkstoffe erheblich zu reduzieren. Solche Eigenschaften bieten dem Anwender erhebliche Vorteile bei der praktischen Unkrautbekämpfung. Er kann den Ackerfuchsschwanz billiger, rascher, mit weniger Arbeitsaufwand sowie dauerhafter bekämpfen und dadurch in einem Kulturpflanzenbestand mehr Ertrag ernten.

Die Mischungsverhältnisse der verschiedenen Komponenten können innerhalb weiter Grenzen schwanken. Sie sind insbesondere abhängig vom eingesetzten Mischungspartner, vom Entwicklungsstadium der Schadgräser und den Klimabedingungen.

Die erfindungsgemäßen Wirkstoffkombinationen können sowohl als Mischformulierungen der beiden Komponenten vorliegen, die dann in üblicher Weise mit Wasser verdünnt oder als Granulate zur Anwendung gebracht werden, oder als sogenannte Tankmischungen durch gemeinsame Verdünnung der getrennt formulierten Komponenten mit Wasser hergestellt werden.

Die Verbindungen (Kombinationen) können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EG), wäßrige Lösungen (SL), Emulsionen (EW) wie Öl-in Wasser- und Wasser-in-Öl- Emulsionen, versprühbare Lösungen oder Emulsionen, Dispersionen auf Öl- oder Wasserbasis, Suspoemulsionen, Stäubemittel (DP), Beizmittel, besonder aber als Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnakker-Küchler, "Chemische Technologie", Band 7, C. Hauser Verlag München, 4. Aufl. 1986; van Valkenburg, "Pesticides Formulations", Marcel Dekker N. Y., 2. Auflage 1972 - 73; K. Martens, "Spray Drying Handbook", 3. Auflage, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2. Auflage, Darland Books, Caldwell N. J.; H. v. Olphen, "Introduction to Clay Colloid Chemistry", 2. Auflage, J. Wiley Sons, N. Y., Marsden, "Solvents Guide", 2. Auflage, Interscience, N. Y. 1950; McCutcheon's, "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder Fettamine, Alkan- oder Alkylbenzolsulfonate und Dispergiermittel, z. B. ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen, unter Zusatz von einem oder mehreren Emulgatoren hergestellt. Als Emulgatoren können beispielsweise verwendet werden: Alkyllaurylsulfonsaure Calcium-Salze wie Ca-Dodecylbenzolsulfonat oder nichtionische Emulgatoren wie Fettsäurepolyglykolester, Alkyllaurylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoff A1 bzw. B1. Die Konzentrationen der Wirkstoffe A1 und B1 können in den Formulierungen verschieden sein.

In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten, z. B. wasserdispergierbaren Granulaten, hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 5 und 90 Gew.-%, bei Streugranulaten zwischen 1 und 50 %, bevorzugt zwischen 2 und 25 %.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen, wie z. B. Temperatur, Feuchtigkeit, der Art des verwendeten Herbizids u. a., variiert die erforderliche Aufwandmenge der Mischungen.

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 5 Gewichtsteile einer Wirkstoffkombination und 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten indem man 20 Gewichtsteile einer Wirkstoffkombination mit 6 Gew.-Teilen Alkylphenolpolyglykolether (®Triton X 207), 3 Gew.-Teile Isotridecanolpolyglykolether (8 E0) und 71 Gew.-Teilen paraffinischem Mineralöl (Siedebereich z. B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen einer Wirkstoffkombination, 75 Gew.-Teilen Cyclohexanon als Lösemittel und 10 Gew.-Teilen oxethyliertes Nonylphenol als Emulgator.

e) Ein in Wasser dispergierbares Granulat wird erhalten, indem man

| | |
|---|---|
| 75 Gewichtsteile | der Wirkstoffkombination |
| 10 Gewichsteile | ligninsulfonsaures Calcium, |
| 5 Gewichsteile | Natriumlaurylsulfat, |
| 3 Gewichsteile | Polyvinylalkohol und |
| 7 Gewichsteile | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 Gewichtsteile | der Wirkstoffkombinationen |
| 5 Gewichsteile | 2,2'-dinaphthylmethan-6,6'-disulfonsaures Natrium, |
| 2 Gewichsteile | oleoylmethyltaurinsaures Natrium, |
| 1 Gewichsteile | Polyvinylalkohol, |
| 17 Gewichsteile | Calciumcarbonat und |
| 50 Gewichsteile | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

Biologische Beispiele

In allen Fällen wurde bei den Kombinationen zwischen dem errechneten und dem gefundenen Wirkungsgrad unterschieden. Der errechnete, theoretisch zu erwartende Wirkungsgrad einer Kombination wird ermittelt nach der Formel von S. R. Colby: "Calculation of synergistic and antagonistic responses of herbicide combinations", Weeds 15 (1967), Seiten 20 - 22.

Diese Formel lautet für Zweierkombinationen:

$$E = X + Y - \frac{X \cdot Y}{100}$$

(für die Kombination von drei herbiziden Wirkstoffen wird eine entsprechend erweiterte Formel angewendet) wobei

X = % Schädigung durch Herbizid A bei x kg/ha Aufwandmenge;
Y = % Schädigung durch Herbizid B bei y kg/ha Aufwandmenge;
Z = % Schädigung durch ein weiteres Herbizid C bei z kg/ha Aufwandmenge;
E = die zu erwartende Schädigung durch die Herbizide A + 10 (bzw. A + B + C ) bei x+y (bzw. x + y + z ) kg/ha

Ist die tatsächliche Schädigung größer als die rechnerisch zu erwartende, so ist die Wirkung der Kombination mehr als additiv, d. h. es liegt ein synergistischer Wirkungseffekt vor.

Die erfindungsgemäßen Wirkstoffkombinationen haben eine herbizide Wirkung, die höher ist als sie auf Grund der beobachteten Wirkungen der Einzelkomponenten bei alleiniger Anwendung zu erwarten ist (Berechnung nach Colby). Die Wirkstoffkombinationen sind somit synergistisch.

1. Unkrautwirkung im Nachauflauf

Die als Spritzpulver bzw. als Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 l/ha auf die grünen Pflanzenteile gesprüht und nach ca. 2 bis 4 Wochen Standzeit der Versuchspflanzen unter optimalen Wachstumsbedingungen die Wirkung der Pärparate optisch im Vergleich zu unbehandelten Kontrollen visuell bonitiert. Die Freilandversuche wurden als Blockanlage mit 3 Wiederholungen und einer Parzellengröße von jeweils 10 $m^2$ angelegt. Die Gewächshausversuche wurden in Plastiktöpfen mit jeweils 0,4 l Boden angelegt.

Die erfindungsgemäßen Mittel weisen im Nachauflauf eine gute herbizide Wirksamkeit gegen Ackerfuchsschwanz und eine Reihe anderer Ungräser auf. Die Wirkungen der erfindungsgemäßen Mittel sind nach der Colby-Analyse synergistisch.

Applikationstermin: Zwei-Blatt-Stadium bis Ende Bestockung der Ackerfuchsschwanzpflanzen; vergleichbare Entwicklungsstadien gelten auch für die Selektivität in Kulturpflanzen Winterweizen, Winterrogen, Triticale.

Applikationsobjekt: Blattfläche

Versuchsanlage:

Erfaßte Parameter zur Bestimmung der herbiziden Wirkung gegen Ackerfuchsschwanz und zur Selektivität der Kulturpflanze.

1. Visuelle Bonitur der herbiziden Wirkung, 0 - 100 %.
2. Auszählung der Ackerfuchsschwanzpflanzen zur Bestimmung des herbiziden Wirkungsgrades in Prozent.
3. Phytotoxis bei Kulturpflanze.

| Beispiel 1 Wirkung der Mischungen in Winterweizen (Freilandversuche) | | | |
|---|---|---|---|
| | Produkt | Dosis (l/ha) | % herbizide Wirkung |
| 1. | Unbehandelt | - | - |
| 2. | A1 | 1,5 | 91 |
| 3. | A1 | 2,0 | 96 |
| 4. | B1 | 0,5 | 72 |
| 5. | B1 | 0,75 | 84 |
| 6. | A1 | 1,5 | 100 |
| | B1 | 0,5 | |
| 7. | A1 | 2,0 | 100 |
| | B1 | 0,75 | |
| Dosierung<br>A1 Wirkstoff: 60 g/l Fenoxaprop-ethyl (Hilfsstoff 15 g/l Fenchlorazol-ethyl)<br>B1 Wirkstoff: 200 g/l Cycloxidim in wäßriger Lösung | | | |

| Beispiel 2 Wirkungsversuch an 26 schwer bekämpfbaren Ackerfuchsschwanzpopulationen von verschiedenen Standorten (Gewächshausversuche). | | | | | |
|---|---|---|---|---|---|
| Nr. | % Wirkungsgrad - Mittel aus 2 Wiederholungen | | | | |
| | A1 2,0 l | | B1 0,4 l | | A1 + B1 2 + 0,4 |
| 1 | 93 | | 95 | | 100 |
| 2 | 83 | | 95 | | 100 |
| 3 | 70 | | 98 | | 100 |
| 4 | 72 | | 95 | | 100 |
| 5 | 93 | | 95 | | 100 |
| 6 | 55 | | 97 | | 100 |
| 7 | 75 | | 97 | | 100 |
| 8 | 63 | | 99 | | 100 |
| 9 | 89 | | 98 | | 100 |
| 10 | 65 | | 97 | | 100 |
| 11 | 40 | | 97 | | 100 |
| 12 | 83 | | 97 | | 100 |
| 13 | 65 | | 98 | | 100 |
| 14 | 75 | | 98 | | 100 |
| 15 | 95 | | 98 | | 100 |

(fortgesetzt)

| Beispiel 2 Wirkungsversuch an 26 schwer bekämpfbaren Ackerfuchsschwanzpopulationen von verschiedenen Standorten (Gewächshausversuche). | | | | | |
|---|---|---|---|---|---|
| Nr. | % Wirkungsgrad - Mittel aus 2 Wiederholungen | | | | |
| | A1 2,0 l | | B1 0,4 l | | A1 + B1 2 + 0,4 |
| 16 | 100 | | 98 | | 100 |
| 17 | 63 | | 98 | | 100 |
| 18 | 70 | | 98 | | 100 |
| 19 | 68 | | 98 | | 100 |
| 20 | 68 | | 99 | | 99 |
| 21 | 83 | | 98 | | 100 |
| 22 | 85 | | 98 | | 100 |
| 23 | 60 | | 99 | | 100 |
| 24 | 70 | | 98 | | 100 |
| 25 | 99 | | 99 | | 100 |
| 26 | 98 | | 100 | | 100 |
| Dosierung siehe Beispiel 1 | | | | | |

| Beispiel 3 Selektivität von A1/B1-Mischungen und A1/B3-Mischungen in Winterweizen (Freilandversuch). | | | | |
|---|---|---|---|---|
| Produkt | | Dosis (l/ha) | % Phytotoxis (Chlorose, Verfärbung) | Kornertrag (86 % TrS, dt/ha) |
| 1. | Unbehandelt | - | - | 65 |
| 2. | A1 | 1,5 | 7 | 79 |
| 3. | A1 | 2,0 | 7 | 81 |
| 4. | B1 | 0,5 | 5 | 75 |
| 5. | B1 | 0,75 | 7 | 75 |
| 6. | A1<br>B1 | 1,5<br>0,5 | 7 | 82 |
| 7. | A1<br>B1 | 2,0<br>0,75 | 9 | 83 |
| Dosierung siehe Beispiel 1 | | | | |

## Patentansprüche

1. Herbizide Mittel, gekennzeichnet gekennzeichnet durch einen synergistisch wirksamen Gehalt an

   A1) Fenoxaprop oder Fenoxaprop-P; ((±) bzw. (2R)-2-[4-(6-Chlorbenzoxazol-2-yloxy)phenoxy]propionsäure (Formel I))oder deren Ester

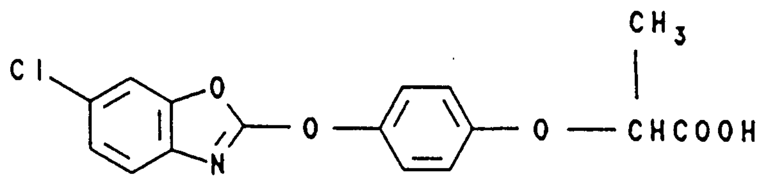

I

in Kombination mit

B1) Cycloxydim; ((±)-2-[1-(Ethoxyimino)-butyl]-3-hydroxy-5-thian-3-ylcyclohex-2-enon, Formel III),

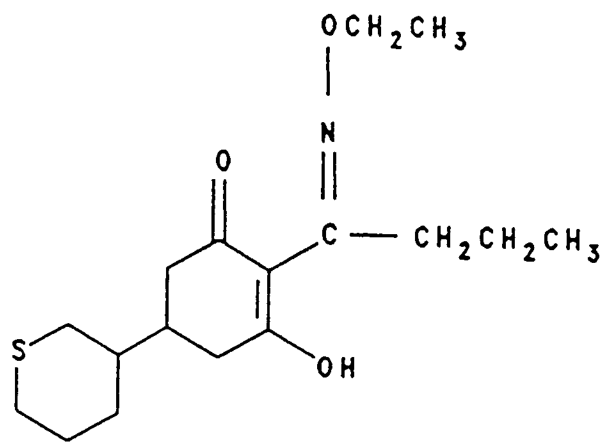

III

2. Mittel nach Anspruch 1, gekennzeichnet durch einen zusätzlichen Gehalt an mindestens einer Verbindung aus der Gruppe, welche die Verbindungen

A2) (2-[4-(5-Chlor-5-fluor-2-pyridinyloxy)-phenoxy]-propionsäurepropinylester (Formel II)

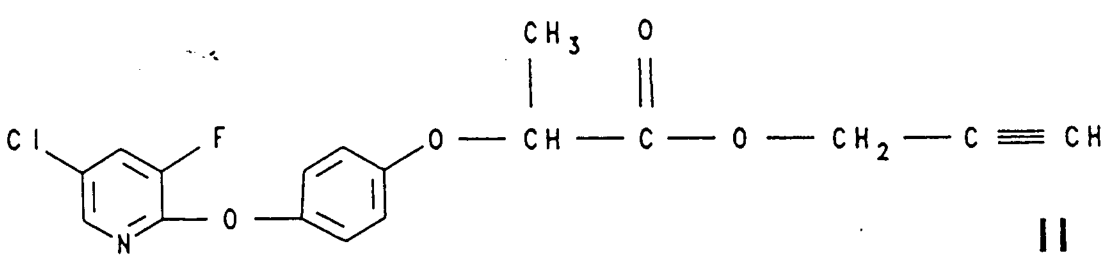

II

B2) Metribuzin; (4-Amino-6-tert.-butyl-3-methylthio--4H-[1,2,4]-triazin-5-on, Formel IV;

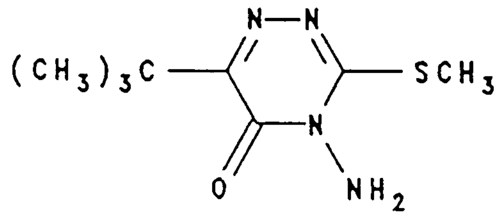

IV

B3) Haloxyfop; (2-[4-[3-Chlor-5-trifluoromethyl]-2-pyridyl]-oxy-phenoxy-propionsäure Formel V),

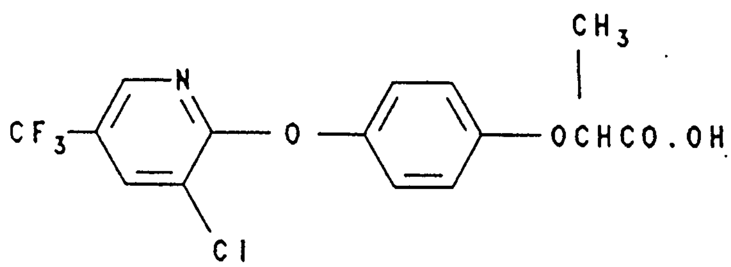

V

oder deren Ester und

B4) Isoproturon, (3-(4-Isopropylphenyl)-1,1-dimethylharnstoff, Formel VI)

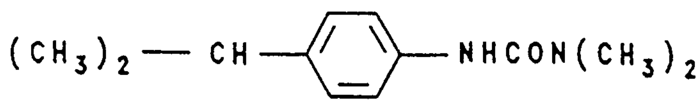

VI

enthält.

3. Mittel nach Anspruch 1, dadurch gekennzeichnet, daß sie 1 bis 99 Gew.-% eines Mittels gemäß Anspruch 1 neben üblichen Formulierungsmitteln enthalten.

4. Verfahren zur Herstellung eines Mittels nach einem oder mehreren der Ansprüche 1 und 2, dadurch gekennzeichnet, daß man das Mittel analog einer üblichen Pflanzenschutzmittelformulierung aus der Gruppe, enthaltend Spritzpulver, emulgierbare Konzentrate, wäßrige Lösungen, Emulsionen, versprühbare Lösungen (Tank-mix), Dispersionen auf Öl- und Wasserbasis, Suspoemulsionen, Stäubemittel, Beizmittel, Boden- oder Streugranulate, wasserdispergierbare Granulate, ULV-Formulierungen, Mikrokapseln oder Wachse formuliert.

5. Verfahren zur Bekämpfung von unerwünschten Pflanzen, dadurch gekennzeichnet, daß man auf diese oder deren Anbauflächen eine wirksame Menge eines Mittels nach einem oder mehreren der Ansprüche 1 bis 3 appliziert.

6. Verfahren nach Anspruch 4, dadurch gekennzeichnet, daß man Ackerfuchsschwanz in Nutzpflanzenkulturen selektiv bekämpft.

7. Verfahren nach Anspruch 5, dadurch gekennzeichnet, daß die Nutzpflanzenkultur Weizen ist.

8. Verwendung der herbiziden Mittel nach einem oder mehreren der Ansprüche 1 bis 3 zur selektiven Unkrautbekämpfung in Nutzpflanzenkulturen.

## Claims

1. A herbicidal composition which comprises a synergistically active content of

A1) fenoxaprop or fenoxaprop-P; ((±) or (2R)-2-[4-(6-chlorobenzoxasol-2-yloxy)phenoxy]propionic acid (formula I)) or an ester of these

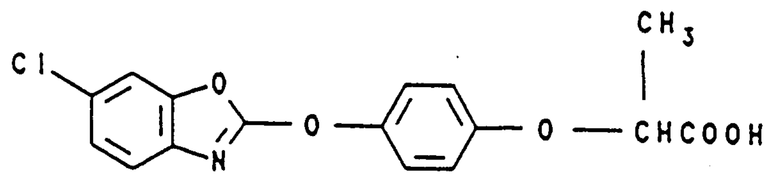

I

in combination with

B) cycloxydim; ((±)-2-[1-(ethoxyimino)butyl]-3-hydroxy-5-thian-3-ylcyclohex-2-enone, formula III)

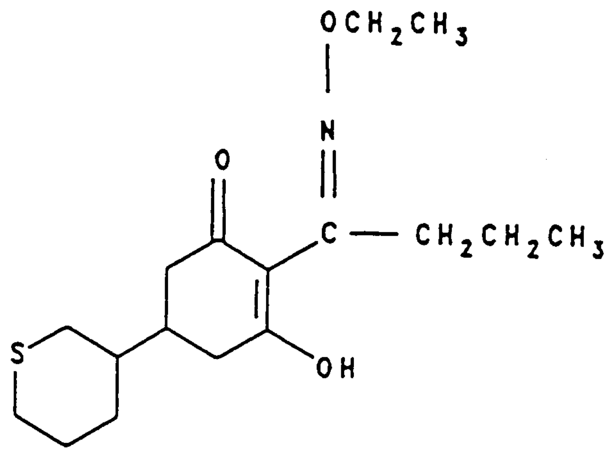

III

2. A composition as claimed in claim 1 which additionally comprises at least one compound selected from the group consisting of the compounds

A2) propynyl (2-[4-(5-chloro-5-fluoro-2-pyridinyloxy)phenoxy]propionate (formula II)

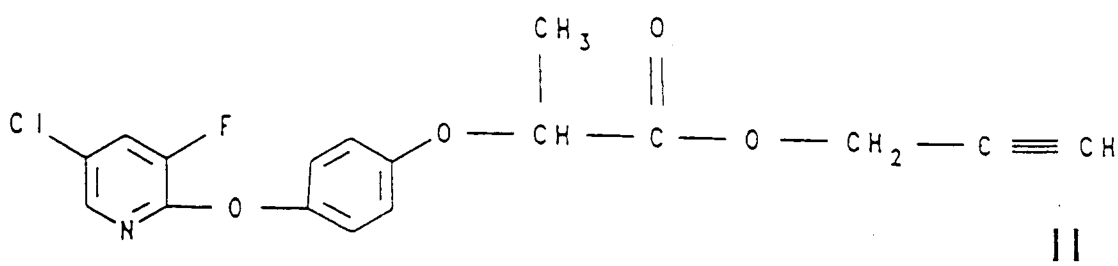

II

B2) metribuzin; (4-amino-6-tert-butyl-3-methylthio-4H-[1,2,4]-triazin-5-one, formula IV)

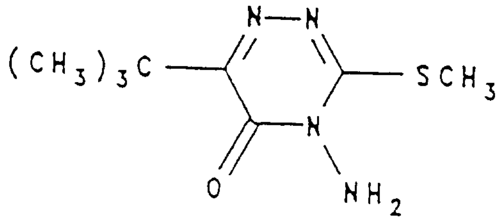

IV

B3) haloxyfop; (2-[4-[3-chloro-5-trifluoromethyl]-2-pyridyl]oxyphenoxypropionic acid, formula V)

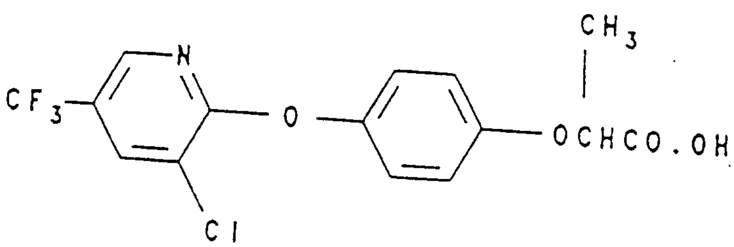

V

or an ester thereof and

B4) isoproturon (3-(4-isopropylphenyl)-1,1-dimethylurea, formula VI)

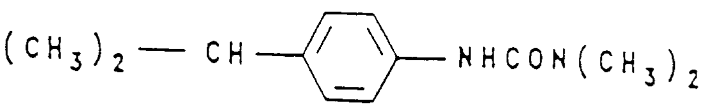

VI

3. A composition as claimed in claim 1 which comprises 1 to 99% by weight of a composition as claimed in claim 1 in addition to customary formulating agents.

4. A method for the preparation of a composition as claimed in one or more of claims 1 and 2, which comprises formulating the composition as for a customary crop protection formulation selected from the group consisting of wettable powders, emulsifiable concentrates, aqueous solutions, emulsions, sprayable solutions (tank mix), oil- and water-based dispersions, suspoemulsions, dusts, seed-dressing products, soil granules, granules for spreading, water-dispersible granules, ULV formulations, microcapsules or waxes.

5. A method of controlling undesired plants, which comprises applying an effective amount of a composition as claimed in one or more of claims 1 to 3 to these plants or the areas on which they are grown.

6. The method as claimed in claim 4, wherein blackgrass is controlled selectively in crops.

7. The method as claimed in claim 5, wherein the crop is wheat.

8. The use of the herbicidal composition as claimed in one or more of claims 1 to 3 for selective weed control in crops.

## Revendications

1. Agents herbicides caractérisés par une teneur synergique en

A1) fenoxaprop ou fenopxaprop-P ; ((±) respectivement l'acide (2R)-2-[4-(6-chlorobenzoxazol-2-yloxy)-phénoxypropionique) (Formule I)) ou ses esters

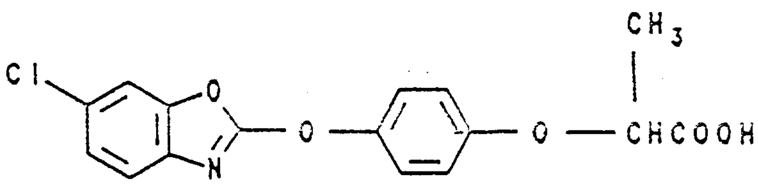

I

en combinaison avec
B1) le cycloxidim ; la ((±)-2-[1-(éthoxyimino)-butyl]-3-hydroxy-5-thian-3-ylcyclohex-2-enone, Formule III)),

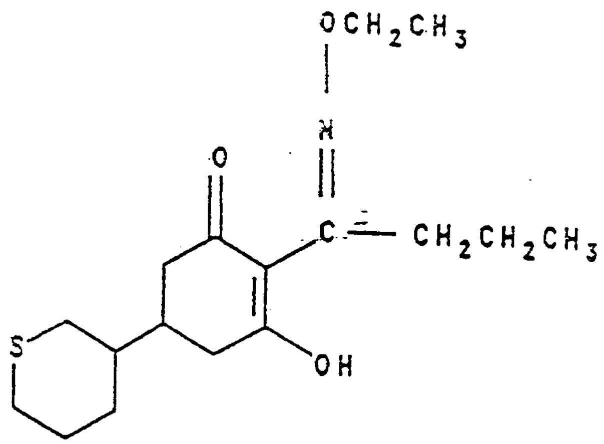

III

2. Agents selon la revendication 1, caractérisés par en plus une teneur en au moins un composé pris dans le groupe comportant les composés

A2) le (2-[4-(5-chloro-5-fluoro-2-pyridinyloxy)-phénoxy]propionate de propynyle (Formule II)

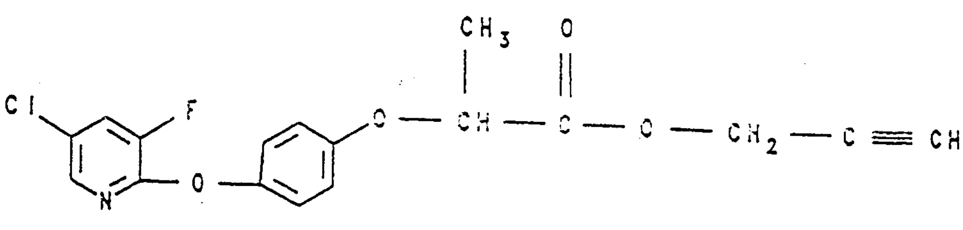

II

B2) le metribuzin ; la (4-amino-6-tert-butyl-3-méthylthio-4H-[1,2,4]-triazin-5-one, (formule IV)

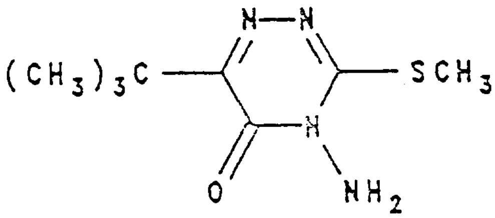

IV

B3) le haloxyfop ; l'acide (2-[4-[3-chloro-5-trifluoro-méthyl[-2-pyridyl]-oxy-phénoxypropionique formule V),

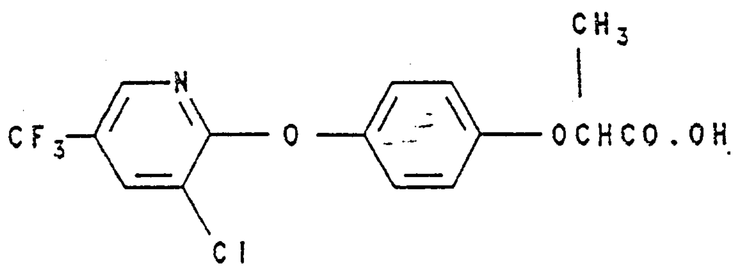

V

ou ses esters et
B4) l'isoproturon, la (3-(4-isopropylphényl)-1,1-diméthyl-urée, formule VI)

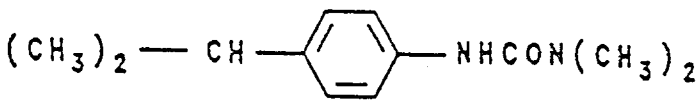

IV

**3.** Agents selon la revendication 1, caractérisés en ce qu'ils contiennent de 1 à 99 % en poids d'un agent selon la revendication 1, outre les adjuvants de formulation usuels.

**4.** Procédé pour la préparation d'un agent selon une ou plusieurs des revendications 1 ou 2, caractérisé en ce que l'on réalise une formulation de l'agent de façon analogue à une formulation d'agents phytoprotecteurs usuels pris dans le groupe comportant des poudres mouillables, des concentrés émulsionnables, des solutions aqueuses, des émulsions, des solutions pulvérisables (tank-mix), des dispersions à base d'huile et d'eau, des suspoémulsions, des agents pour poudrage, des appâts, des granulés pour application au sol ou par épandage, des granulés dispersables dans l'eau, des formulations ULV, des microcapsules ou des cires.

**5.** Procédé pour la lutte contre une végétation indésirable, caractérisé en ce que l'on applique sur celle-ci ou sur la surface cultivable une quantité efficace d'un agent selon une ou plusieurs des revendications 1 à 3.

**6.** Procédé selon la revendication 4, caractérisé en ce que l'on lutte sélectivement contre le vulpain des champs dans la culture des plantes utiles.

**7.** Procédé selon la revendication 5, caractérisé en ce que la culture de plante utile est le blé.

**8.** Utilisation des agents herbicides selon une ou plusieurs des revendications 1 à 3, pour la lutte sélective contre les plantes nuisibles dans la culture des plantes utiles.